# EUROPÄISCHE PATENTSCHRIFT

(11) **EP 0 580 272 B1**
(45) Veröffentlichungstag und Bekanntmachung des Hinweises auf die Patenterteilung: **09.10.1996**
(21) Anmeldenummer: 93250201.6
(22) Anmeldetag: 09.07.1993
(51) Int. Cl.: F16F 7/10, F16F 13/00, E04B 1/98

(54) **Schwingungsdämpfer**
Vibration damper
Amortisseur de vibrations

(30) Priorität: 15.07.1992 DE 4223786
(43) Veröffentlichungstag der Anmeldung: 26.01.1994
(73) Patentinhaber: GERB Schwingungsisolierungen GmbH & Co. KG, D-13407 Berlin (DE)
(72) Erfinder: Weber, Frank-Michael, Dipl.-Phys., D-10781 Berlin (DE); Valdivia, Anton, Dr.-Ing., D-10553 Berlin (DE)
(74) Vertreter: Christiansen, Henning, Dipl.-Ing.

(56) Entgegenhaltungen:
- EP-A- 0 122 873
- EP-A- 0 234 310
- DE-A- 3 005 983
- DE-A- 3 424 338
- DE-A- 3 610 611
- DE-A- 3 831 816
- FR-A- 1 594 997
- GB-A- 2 208 419
- US-A- 3 288 419
- PATENT ABSTRACTS OF JAPAN vol. 10, no. 21 (M-449)(2078) 28. Januar 1986 & JP-A-60 179 543 (NISSAN JIDOSHA KK) 13. September 1985
- INTERNATIONAL POLYMER SCIENCE AND TECHNOLOGY Bd. 12, Nr. 11 , 1985 , SHAWBURY GB Seiten 148 - 153 K.KURR G.H.TICKS 'Hydraulically-damped rubber mountings'
- Journal S.I.A. - Oktober 1958. M.-A. Julie "Examen synoptique, sur leurs modèles comm des problèmes de suspension à deux étages d'amortissement dynamique des vibrations"
- 'Taschenbuch für den Maschinenbau/DUBBEL' 1990 , SPRINGER-VERLAG , BERLIN * Seite B39, Spalte 2 - Seite B40, Spalte 1 *

## Beschreibung

Die Erfindung betrifft einen Schwingungsdämpfer der im Oberbegriff des Anspruchs 1 angegebenen Art sowie ein System zur Schwingungsisolierung. Ein derartiger Schwingungsdämpfer und ein derartiges system sind aus der DE-A-3 424 338 bekannt. Maschinen, Aggregate und sogar Gebäude sind häufig gegenüber Schwingungen isoliert zu lagern. Bei schwingungserzeuMaschinen, Systemen oder Aggregaten dient die Schwingungsisolierung dazu, eine Übertragung der Erschütterungen in die Umgebung zu verhindern. In anderen Fällen kann es auch notwendig werden, eine Übertragung von Erschütterungen oder Schwingungen auf den zu isolierende Gegenstand zu verhindern. Zu diesem Zweck wird das System über elastische Zwischenglieder von dem Fundament, auf dem es ruht, abgekoppelt. Von der Erregungskraft werden daher je nach Frequenz nur noch Bruchteile übergeleitet.

Bei den bekannten Lösungen stellt das System aus Maschinenmasse und Feder dabei einen Einmassenschwinger mit einer bestimmten Eigenfrequenz dar. Schwingungen oberhalb dieser Eigenfrequenz werden isoliert. Wird die Maschine dagegen mit der Eigenfrequenz angeregt, so kommt es zu einer resonanzartigen Überhöhung der Kraftübertragungsfunktion. Um die Maschinenbewegungen bei dieser Frequenz zu begrenzen, werden parallel zu den elastischen Gliedern häufig viskose Schwingungsdämpfer geschaltet.

Viskose Dämpfer bestehen in der Praxis aus einem meist zylindrischen Dämpfergehäuse, das mit einer Befestigungsplatte am Fundament angebracht ist, und einem über eine obere Befestigungsplatte mit der Maschine verbundenen Dämpferstempel, der ebenfalls meist zylindrisch ausgebildet ist. Das Dämpfergehäuse ist mit einem viskosen bzw. viskoelastischen Dämpfungsmedium gefüllt, in das der Dämpferstempel von oben her eintaucht. Derartige Dämpfer sind beispielsweise aus der DE 34 24 338 C2 bekannt und lassen sich durch ihre komplexe Steifigkeit beschreiben, aus deren Imaginärteil sich der Dämpfungswiderstand als wichtigste Kenngröße ableiten läßt.

Bei Dämpfern, die nach dem Maxwell-Modell durch die Reihenschaltung eines idealen Dämpfers und einer idealen Feder dargestellt werden können, ist der Dämpfungswiderstand frequenzabhängig. Zu hohen Frequenzen hin nähert sich die komplexe Steifigkeit eines derartigen Systems dem (konstanten) Wert der internen, realen Federsteifigkeit mehr und mehr an. Dies hat bei höheren Frequenzen eine deutliche Verschlechterung des Isolierwirkungsgrads gegenüber dem unbedämpft elastisch gelagerten System zur Folge, so daß Körperschallfrequenzen nahezu ungehindert übertragen werden.

Der Erfindung liegt die Aufgabe zugrunde, bei einem Schwingungsdämpfer der eingangs genannten Gattung einerseits die Körperschallübertragung insbesondere bei höheren Frequenzen zu vermindern und andererseits bei tiefen Frequenzen die Dampfungswirkung zu erhalten. Weiterhin sollen entsprechende vollständige Systeme angegeben werden.

Diese Aufgabe wird mit den kennzeichnenden Merkmalen des Anspruchs 1 gelöst.

Die Erfindung schließt die Erkenntnis ein, daß reale viskose Dämpfer kaum jemals den als idealisiert angenommenen Bedingungen entsprechen. Je nach Frequenz weist die Dämpferkraft geschwindigkeitsproportionale - also dämpfende und wegproportionale - also elastische - Anteile auf. In einem besonders einfachen Modell kann nach Maxwell der reale Dämpfer als Reihenschaltung eines idealen Dämpfers und einer idealen Feder aufgefaßt werden. Bei höheren Frequenzen ist der ideale Dämpfer als starr zu betrachten, die komplexe Steifigkeit des Maxwell-Dämpfers geht über in die reale Steifigkeit der idealen Feder. Diese ist frequenzunabhängig, daher werden hochfrequente Schwingungen (Körperschall) von Maxwell-Dämpfern übertragen. Bei der erfindungsgemäßen Lösung werden diese hochfrequenten Schwingungen durch zusätzliche elastische Mittel und zwischengeschaltete Massen, aus denen sich mechanische Tiefpässe ergeben, abgekoppelt, wodurch der Isolierwirkungsgrad eines gedämpft elastisch gelagerten Systems wesentlich verbessert werden kann. Die Frequenz, bei der diese Abkoppelung einsetzt, kann konstruktiv in weiten Grenzen beeinflußt werden, bevorzugt handelt es sich hierbei um den Hörbereich, d.h. Frequenzen oberhalb von ca. 20 Hz bis zur oberen Hörgrenze.

Durch die Integration eines Tiefpasses erster oder höherer Ordnung in den Dämpfer eines Systems zur Schwingungsisolierung ergibt sich der Vorteil, daß Schwingungen, die in Form von Körperschall übertragen und durch die übrige elastische Lagerung des Systems ferngehalten werden, nicht mehr über die Dämpfer übertragen werden. Hierbei ist es günstig, wenn der frequenzabhängige Verlauf der Abkopplung (Dämmung) durch die Dämpfer zu höheren Frequenzen hin im wesentlichen der Abkopplung durch die übrige elastischen Lagerung entspricht, da sonst die Übertragung des Körperschalls jeweils von dem Systemteil mit der geringeren Isolierwirkung übernommen wird. Je Ordnung des Tiefpasses lassen sich Abkopplungen mit einer Steigung von 6, 12 oder mehr dB/Oktave erzeugen.

Zur Begrenzung der Bauhöhe des Dämpfers ist es günstig, wenn das zwischen Dämpferstempel und zu dämpfender Masse zwischengeschaltete elastische Element sich für einen wesentlichen Teil seiner Länge in den in Form eines offenen Topfes ausgebildeten Dämpferstempel hinein erstreckt.

Um die Masse des in den Dämpfer integrierten Tiefpasses weiter heraufzusetzen, ist bei einer anderen bevorzugten Ausführungsform auch die Masse des über ein elastisches Element auf der Unterlage abgestützten Dämpfergehäuses durch eine Zusatzmasse über seine für seine statische und dynamische Festigkeit aufgrund des verwendeten Materials notwendige Masse hinaus vergrößert.

Zur Heraufsetzung der Massen des mechanischen Tiefpasses und damit zur Herabsetzung seiner Eckfrequenz können verschiedene Maßnahmen ergriffen werden. Insbesondere kann die Zusatzmasse aus mindestens einem platten-oder scheibenförmigem Metallkörper bestehen, der mit dem Dämpferstempel mechanisch fest verbunden ist. In anderen Fällen kann die Zusatzmasse aus aus einer Verstärkung der Wandungsstärke des aus Metall hergestellten Dämpferstempels oder der Dämpferstempel mindestens teilweise aus metallischem Vollmaterial bestehen.

Zur Integration von Tiefpässen höherer Ordnung können in den mit Dämpferstempel oder -topf verbundenen Elastizitäten auch Zwischenmassen geeigneter Bemessung vorgesehen sein.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1a ein erstes vorteilhaftes Ausführungsbeispiel der Erfindung im Schnitt,
Figur 1b das mechanische Ersatzschaltbild zu dem in Figur 1a dargestellten Ausführungsbeispiel in Verbindung mit einem einfach elastisch gelagerten System,
Figur 2a ein weiteres Ausführungsbeispiel der Erfindung im Schnitt,
Figur 2b das mechanische Ersatzschaltbild des Ausführungsbeispiel gemäß Figur 2a in Verbindung mit einem zweifach elastisch gelagerten System,
Figur 3 eine grafische Darstellung der Durchgangsdämmungen verschiedener mit idealen Federn einfach elastisch gelagerter Systeme in Abhängigkeit von der Frequenz,
Figur 4 eine grafische Darstellung der Durchgangsdämmungen verschiedener doppelt-elastisch gelagerter Systeme in Abhängigkeit von der Frequenz sowie
Figur 5 ein weiteres, komplexer ausgestaltetes Ausführungsbeispiel der Erfindung.

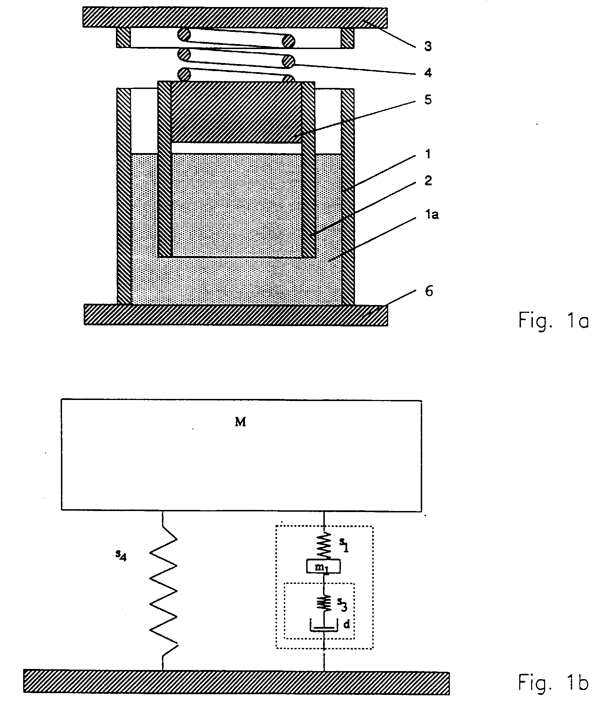

Der mechanische Aufbau eines ersten Ausführungsbeispiels der Erfindung ist in Figur 1a dargestellt: Der Dämpfer besteht hierbei aus einem Dämpfergehäuse 1, das mit einem viskosen oder viskoelastischen Medium la mindestens teilweise gefüllt ist und einem Dämpferstempel 2, der von oben in das Medium 1a eintaucht. Gehäuse und Stempel sind einerseits mit Hilfe von Spannplatten 3, 6 an dem - in der Zeichnung als solches nicht dargestellten - zu isolierenden Aggregat und andererseits am die Unterlage bildenden Fundament befestigt. Der Dämpferstempel ist mit einer Zusatzmasse 5 versehen, die im Gegensatz zu herkömmlichen Dämpfern nicht starr, sondern über eine ein elastisches Zwischenglied bildende Feder 4 an der oberen Spannplatte 3 befestigt ist.

Die Masse 5 bildet zusammen mit der Feder 4 einen mechanischen Tiefpaß erster Ordnung, dessen Grenzfrequenz ω_{g} durch eine geeignete Bemessung der Bauteile an die Anforderungen der jeweiligen Anwendung angepaßt werden kann. Die Grenzfrequenz ω_{g} ist dabei so zu wählen, daß einerseits eine möglichst weitgehende Abkoppelung des Dämpfers im Körperschallbereich erreicht wird, andererseits eine ausreichende Dämpfung im Bereich der Eigenfrequenz ωₒ des Hauptsystems gewährleistet werden kann. Bei tiefen Frequenzen kann der Dämpfer seine gewünschte Wirkung voll entfalten, da der Dämpferstempel über die Feder mit angekoppelter Masse bewegt wird.

Als elastisches Zwischenglied 4 kommen insbesondere Schraubenfedern und Tellerfedern, die ihrerseits bedämpft werden können, sowie Bauteile aus gummielastischen Materialen, Weich-PVC usw. in Betracht. Durch geeignete Wahl dieser Bauteile ist es auch möglich, unterschiedliche Abkoppelfrequenzen für horizontale und vertikale Beanspruchungen des Dämpfers zu erreichen.

In Figur 1b ist eine mittels einer Feder s₄ elastisch gelagerte Maschine der Masse M, die zusätzlich über einen Dämpfer gemäß Figur 1 abgestützt ist, im Ersatzschaltbild dargestellt. Die Dämpferanordnung gemäß Figur 1a ist im rechten Teil der Darstellung unterhalb der Masse M wiedergegeben. Hierbei entsprechen die Feder s₁ dem elastischen Zwischenglied 4, die Masse m₁ der Masse des Dämpferstempels 2 einschließlich Zusatzmasse 5 und die Elemente s₃ und d dem mit einem viskoelastischen Medium 1a gefüllten Dämpfer.

Bei den zur Erzeugung des mit dem Dämpfer verbundenen Tiefpasses notwendigen Maßnahmen kann von einem geringen zusätzlichen Höhenbedarf ausgegangen werden, da der obere Dämpferteil bei üblichen Dämpfern ohnehin leer ist. Dies gilt insbesondere bei Anwendungen im Schiffbau, da die dort verwendeten Dämpfer meist nur ungefähr bis zur Hälfte mit dämpfendem Medium gefüllt sind, um ein Auslaufen bei Krängung des Schiffes zu verhindern.

Bei einem nicht dargestellten weiteren Ausführungsbeispiel kann zum Erreichen einer möglichst tiefen Grenzfrequenz des Tiefpaßfilters das Hilfssystem aus Feder und Masse auch unterhalb des Dämpfers, d.h. am Dämpfergehäuse angebracht werden. In diesem Fall wird die wirksame Masse durch das gesamte Eigengewicht des Dämpfers gebildet, die gegebenenfalls durch eine zusätzliche Masse erhöht werden kann. Dieses Ausführungsbeispiel ergibt sich aus den nachfolgend dargestellten bei Fortlassung des elastischen Elements oberhalb des Dämpferstempels.

Bei einer günstigen Ausführung ist dabei als elastisches Element ein Elastomerlager vorgesehen, das den Dämpfertopf ringförmig umgibt, wobei dieser über einen angeschweißten Tragring auf diesem Element aufliegt. Auch hierdurch wird der zusätzliche Höhenbedarf reduziert. Eine derartige Ausgestaltung ist auch für die im folgenden zu beschreibenden Dämpfer günstig.

Während - wie weiter unten im einzelnen dargelegt werden wird - bei einem zweistufigen Aufbau die mit einem einfach-elastisch gelagertem Hauptsystem erzielbare Verbesserung der Körperschallisolierung schon im wesentlichen ausgeschöpft ist, weil oberhalb der Grenzfrequenzen der Tiefpaßfilter die Übertragungsfunktion praktisch nur von den Federn der elastischen Lagerung selbst bestimmt wird, sind für komplexere Lagerungen auch komplizierter aufgebaute Dämpfer günstig.

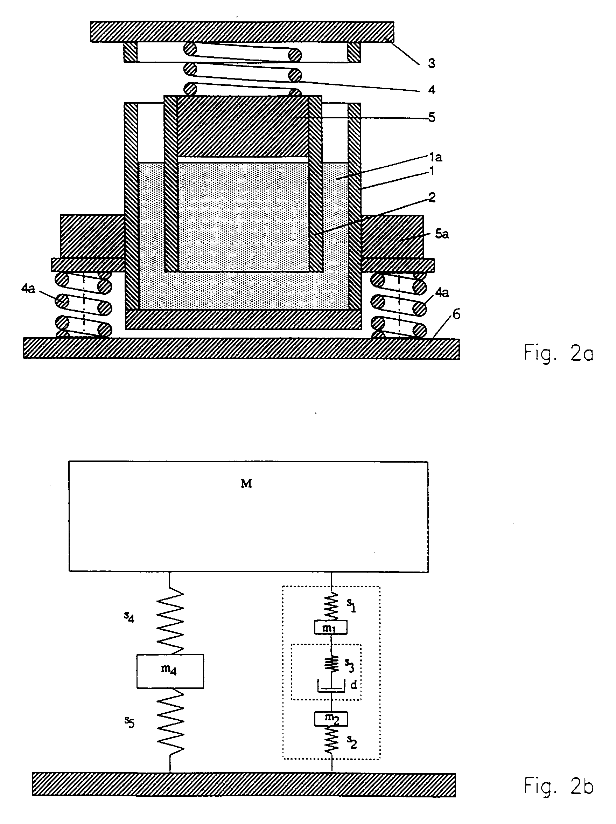

Eine entsprechende Dämpferausführung ist in Figur 2a dargestellt: Bei dem dort wiedergebenen Ausführungsbeispiel sind zwei Tiefpaßfilter vorgesehen. Die mit dem in Figur 1 dargestellten Ausführungsbeispiel funktionsmäßig übereinstimmenden Bauteile sind mit identischen Bezugszeichen versehen und brauchen hier nicht näher beschrieben zu werden. So sind am Dämpferstempel 2 wieder eine Feder 4 und eine Zusatzmasse 5 vorgesehen. Das Gewicht des Dämpfertopfes einschließlich des Dämpfungsmediums 1a wird durch eine weitere Zusatzmasse 5a erhöht. Der gesamte Aufbau ruht auf zusätzlichen als Schraubenfedern ausgestalteten elastischen Gliedern 4a, die sich ihrerseits auf der Grundplatte 36 abstützen, an der sie befestigt sind. Die Federn 4a sind dabei generell so ausgestaltet, daß - bezogen auf die Ruhestellung - in ausreichendem Maße sowohl Zug- als auch Druckbelastungen aufgenommen werden können.

In Figur 2b ist die Wirkungsweise eines derartigen Dämpfers in Form eines mechanischen Schaltbilds innerhalb eines Systems dargestellt, das im übrigen mit zweistufigen elastischen Elementen s₄/s₅ abgestützt ist, die Zwischenmassen m₄ aufweisen, wie sie beispielhaft im linken Teil der Darstellung ober- und unterhalb der Masse m₄ wiedergegeben sind. Im oberen Teil ist der Dämpfer über einen Tiefpaß m₁/s₁ an die Maschine angekoppelt, im unteren Teil existiert ein zweiter Tiefpaß, der aus der Feder s₂ und der Masse m₂ besteht. In dieser Masse enthalten ist die Masse des Dämpferunterteils. Das Gesamtsystem besteht damit also aus einem Maxwelldämpfer und einem in Reihe geschalteten, mechanischen Tiefpaß zweiter Ordnung.

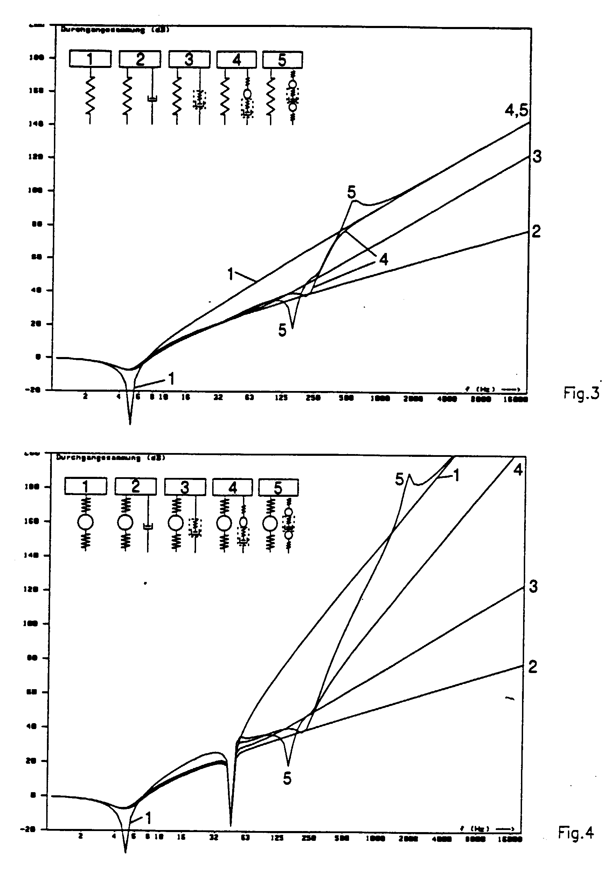

In Figur 3 ist das Dämmungsverhalten unterschiedlicher Systeme in Abhängigkeit von der Frequenz nebeneinander wiedergegeben. Die links oben mit arabischen Ziffern als Ersatzschaltbild schematisch dargestellten Systeme sind in ihrem Verhalten durch Kurven dargestellt, die mit den entsprechenden Ziffern bezeichnet sind.

Mit "1" bezeichnet ist das Verhalten eines bekannten, rein elastisch gelagerten ungedämpften Systems. Hierbei ist deutlich der Einbruch der Dämmung im Resonanzbereich zu erkennen.

Das mit "2" bezeichnete bekannte System weist einen einfachen Dämpfer auf, der mit rein viskosem Dämpfungsmedium gefüllt ist, während bei dem mit "3" bezeichneten System ein viskoelastisches Dämpfungsmedium Verwendung findet.

Die mit den erfindungsgemäßen Dämpfern gemäß Figuren 1a und 2a sind mit "4" bzw. "5" bezeichnet.

Bei dem in Figur 3 mit "4" bezeichneten Verlauf ist die Verbesserung der Isolierwirkung am Beispiel eines Tiefpasses mit einer Grenzfrequenz von etwa 200 Hz dargestellt. Es ist ersichtlich, daß die Dämpfung des Hauptsystems bei tiefen Frequenzen praktisch konstant bleibt, oberhalb der Grenzfrequenz wird die Isolierung jedoch erheblich verbessert: Die Übertragungsfunktion nähert sich dem Verlauf "1", der das Verhalten eines ungedämpft auf idealen Federn gelagerten Systems wiedergibt.

Mit einem Dämpfer mit einem Tiefpass zweiter Ordnung gemäß Figur 2a kann bei einem einfach elastisch gelagerten System im Vergleich zu einem Dämpfer mit einem Tiefpaß erster Ordnung (Figur 1a) keine wesentliche Verbesserung im Bereich höherer Frequenzen erzielt werden, wie der Vergleich der Kurven "4" und "5" zeigt.

In Figur 4 ist - entsprechend Figur 3 - ebenfalls das Dämmungsverhalten unterschiedlicher Systeme in Abhängigkeit von der Frequenz nebeneinander wiedergegeben. Auch hier sind die links oben mit arabischen Ziffern als Ersatzschaltbild schematisch dargestellten Systeme in ihrem Verhalten durch Kurvenverläufe dargestellt, die mit den entsprechenden Ziffern bezeichnet sind. Im Gegensatz zu der Darstellung in Figur 3 sind die Systeme aber - durch Federn mit Zwischenmassen - doppelt elastisch gelagert.

Hier ist mit "1" bezeichnet das Verhalten eines bekannten ausschließlich doppelt elastisch gelagerten ungedämpften Systems. Auch dabei ist der jeweilige Einbruch der Dämmung in den Resonanzbereichen deutlich zu erkennen.

Das mit "2" bezeichnete bekannte System weist wieder einen einfachen Dämpfer auf, der mit rein viskosem Dämpfungsmedium gefüllt ist, während bei dem mit "3" bezeichneten System ein viskoelastisches Dämpfungsmedium Verwendung findet.

Systeme mit den erfindungsgemäßen Dämpfern gemäß Figuren 1a und 2a sind in den mit "4" bzw. "5" bezeichneten Systemen und den zugehörigen Kurvenverläufen eingesetzt. Es ist ersichtlich, daß der erfindungsgemäße Dämpfer mit einem Tiefpaß erster Ordnung (Kurve "4") bei höheren Frequenzen eine erhebliche Verbesserung gegenüber einem viskoelastischen Dämpfer nach Maxwell (Kurve "3") darstellt, andererseits wird im allgemeinen die durch das ideale Doppelfedersystem vorgegebene Asymptote (Kurve "1") erst bei akustisch nicht mehr interessanten Frequenzen erreicht (im Bild nicht dargestellt). Bei Verwendung eines Dämpfers nach Figur 2a kann die Isolierwirkung bei hohen Frequenzen dagegen nochmals deutlich verbessert werden (Kurve "5"). Es ist deutlich, daß mit einem Doppelfedersystem - im Vergleich zu den Systemen mit "idealen" Feder nach Figur 3 - oberhalb einer Resonanzfrequenz (in Figur 4 bei etwa 50 Hz) eine erheblich bessere Körperschallisolierung erreicht werden kann.

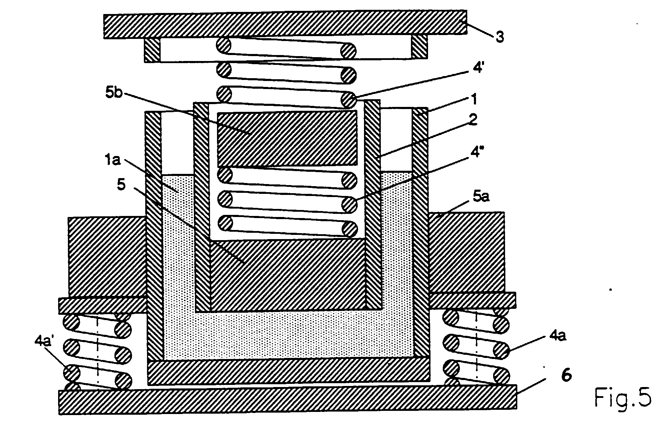

Prinzipiell kann die Isolierung hoher und höchster Frequenzen durch Reihenschaltung weiterer mechanischer Tiefpaßfilter paßfilter weiter verbessert werden. Ein Dämpfer mit Filter dritter Ordnung ist in Figur 5 dargestellt. Hierbei ist - bei im übrigen mit entsprechenden Bezugszeichen versehenen Elementen die Feder 4 in zwei Teile 4' und 4" unterteilt, wobei zwischen den Federteilen eine Zwischenmasse 5b vorgesehen ist. Diese bilden zusammen mit dem aus den Federn 4a und 4a' und den beteiligten Massen das Filter dritter Ordnung. Sinnvoll ist der Einsatz derartiger Dämpfer in der elastischen Lagerung von Maschinen oder anderen massebehafteten Systemen insbesondere, wenn gleichzeitig entsprechende Filter höherer Ordnung bei den verwendeten, das zu isolierende System stützenden Federsystemen vorgesehen werden - also statt der bisher dargestellten Einfach- und Doppelfedersystemen auch dreifach-, vierfach- oder n-fach-Federsysteme vorgesehen werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht, wobei diese Varianten in Übereinstimmung sind mit dem Gegenstand gemäß Anspruch 1.

## Patentansprüche

1. Schwingungsdämpfer für ein System zur Schwingungsisolierung von Objekten (3) großer Masse, wie Maschinen, Aggregaten oder Gebäuden, gegenüber einer Unterlage (6), bestehend aus einem mit einem viskosen oder viskoelastischem Medium (1a) teilweise gefüllten Dämpfergehäuse (1), in das ein Dämpferstempel (2) eintaucht, der mit dem zu isolierenden Objekt (3) derart verbunden ist, daß er im Kraftfluß zwischen dem Objekt (3) und der Unterlage (6) angeordnet ist,
**dadurch gekennzeichnet**,
daß zur verringerung der Körperschallübertragung - insbesondere zu höheren Frequenzen hin - ein zwischen Dämpferstempel (2) und zu dämpfendem Objekt (2) zwischengeschaltetes elastisches Element (4) vorgesehen ist und die Masse des Dämpferstempels durch eine Zusatzmasse (5) über seine für seine statische und dynamische Festigkeit aufgrund des verwendeten Materials notwendige Masse hinaus vergrößert ist.

2. Schwingungsdämpfer nach Anspruch 1, **dadurch gekennzeichnet**, daß das zwischen Dämpferstempel (2) und zu dämpfendem Objekt eingeschaltete elastische Element (4) sich für einen wesentlichen Teil seiner Länge in den in Form eines offenen Topfes ausgebildeten Dämpferstempel (1) hinein erstreckt.

3. Schwingungsdämpfer nach Anspruch 1 oder 2, **dadurch gekennzeichnet,** daß das Dämpfergehäuse (1) über ein zwischengeschaltetes elastisches Element (4a) auf seiner Unterlage (6) abgestützt ist.

4. Schwingungsdämpfer nach einem der vorangehenden Ansprüche, **dadurch gekennzeichnet,** daß auch die Masse des über ein elastisches Element (4a) auf der Unterlage (6) abgestützten Dämpfergehäuses (1) durch eine Zusatzmasse (5a) über seine für seine statische und dynamische Festigkeit aufgrund des verwendeten Materials notwendige Masse hinaus vergrößert ist.

5. Schwingungsdämpfer nach einem der vorangehenden Ansprüche, **dadurch gekennzeichnet**, daß die Zusatzmasse (5) aus mindestens einem platten- oder scheibenförmigem Metallkörper besteht, der mit dem Dämpferstempel (2) mechanisch starr verbunden ist.

6. Schwingungsdämpfer nach einem der vorangehenden Ansprüche, **dadurch gekennzeichnet**, daß die zusatzmasse (5) aus einer Verstärkung der Wandungsstärke des aus Metall hergestellten Dämpferstempels (2) besteht.

7. Schwingungsdämpfer nach einem der vorangehenden Ansprüche, **dadurch gekennzeichnet**, daß der Dämpferstempel (2) mindestens teilweise aus metallischem Vollmaterial besteht.

8. Schwingungsdämpfer nach einem der vorangehenden Ansprüche, **dadurch gekennzeichnet**, daß der Dämpferstempel (2) und/oder die Zusatzmasse (5) aus einem Material mit großem spezifischen Gewicht, das mindestens dem von Stahl entspricht, besteht.

9. Schwingungsdämpfer nach einem der vorangehenden Ansprüche, **dadurch gekennzeichnet**, daß das zwischen Dämpferstempel (2) und zu dämpfendem Objekt zwischengeschaltete elastische Element (4) mindestens eine Zwischenmasse aufweist.

10. Schwingungsdämpfer nach einem der vorangehenden Ansprüche, **dadurch gekennzeichnet**, daß das elastische Element (4, 4a) aus einer Schrauben- oder Tellerfederanordnung, aus gummielastischem Material oder Weich-PVC, besteht.

11. Schwingungsdämpfer nach Anspruch 10, **dadurch gekennzeichnet**, daß das elastische Element (4, 4a) zusätzlich bedämpft ist.

12. Schwingungsdämpfer nach einem der vorangehenden Ansprüche, **gekennzeichnet durch** einen integrierten Tiefpaß erster oder höherer Ordnung.

13. System zur Schwingungsisolierung mit einem Schwingungsdämpfer nach einem der vorangehenden Ansprüche, **dadurch gekennzeichnet,** daß das zu isolierende Objekt zusätzlich durch elastische Elemente (S₄) und/oder Zusatzmassen (m₄) aufweisende elastische Elemente (S₄, S₅) abgestützt ist.

14. System nach Anspruch 13, **dadurch gekennzeichnet**, daß zur Schwingungsisolierung Federn (4, 4a) zur Abstützung verwendet werden, welche Zusatzmassen (5, 5a) enthalten, die ihrerseits beidseits von elastischen Elementen abgestützt werden.

15. System nach Anspruch 14, **dadurch gekennzeichnet,** daß mit Erhöhung der Ordnung des das zu isolierende Objekt stützenden Federsystems (4, 4a) auch die Ordnung der Filter heraufgesetzt ist, welche durch die mit dem Dämpferstempel (2) und/oder das Dämpfergehäuse (1) verbundenen elastischen Elemente (4, 4a) und Massen (5, 5a) gebildet werden.

## Claims

1. A vibration damper for a system for vibrationally isolating objects (3) of large mass, such as machinery, plants or buildings, with respect to a base (6), comprising a damper housing (1) partially filled with a viscous or visco-elastic medium (la), into which housing plunges a damping plunger (2) which is connected with the object (3) to be isolated such that it is arranged in the flux of force between the object (3) and the base (6), characterised in that in order to reduce the transfer of noise through the body, especially up to higher frequencies, an elastic member (4) is provided, which is connected between the damping plunger (2) and the object (3) to be damped, and the mass of the damping plunger is increased by an additional mass (5) to above the mass, determined by the material used, required for the static and dynamic resistance thereof.

2. A vibration damper according to claim 1,
characterised in that the elastic member (4) connected between the damping plunger (2) and the object to be damped extends over a substantial part of its length into the damping plunger (1) which is constructed in the form of an open cup.

3. A vibration damper according to claim 1 or 2, characterised in that the damper housing (1) is supported on its base (6) via an interposed elastic member (4a).

4. A vibration damper according to one of the preceding claims, characterised in that the mass of the damper housing (1) supported on the base (6) via an elastic member (4a) is also increased by an additional mass (4a) to above the mass, determined by the material used, of the housing required for the static and dynamic resistance thereof.

5. A vibration damper according to one of the preceding claims, characterised in that the additional mass (5) comprises at least one plate- or disc-like metal body which is mechanically fixedly connected to the damping plunger (2).

6. A vibration damper according to one of the preceding claims, characterised in that the additional mass (5) consists of a reinforcement of the wall thickness of the metal damping plunger (2).

7. A vibration damper according to one of the preceding claims, characterised in that the damping plunger (2) is made, at least partially, of solid metal.

8. A vibration damper according to one of the preceding claims, characterised in that the damping plunger (2) and/or the additional mass (5) is made of a material with a high specific weight which corresponds at least to that of steel.

9. A vibration damper according to one of the preceding claims, characterised in that the elastic member (4) connected between the damping plunger (2) and the object to be damped has at least one intermediate mass.

10. A vibration damper according to one of the preceding claims, characterised in that the elastic member (4, 4a) comprises a screw or plate spring arrangement made of rubber-elastic material or soft PVC.

11. A vibration damper according to claim 10,
characterised in that the elastic member (4, 4a) is additionally damped.

12. A vibration damper according to one of the preceding claims, characterised by an integrated lowpass filter of first or higher order.

13. A system for vibration isolation, comprising a vibration damper according to one of the preceding claims, characterised in that the object to be isolated is additionally supported by elastic members (s₄) and/or elastic members (s₄, s₅) having additional masses (m₄).

14. A system according to claim 13, characterised in that for the purpose of vibration isolation, springs (4, 4a) are used as support, which comprise additional masses (5, 5a) which are supported, in turn, on both sides, by elastic members.

15. A system according to claim 14, characterised in that as the order of the spring system (4, 4a) supporting the object to be isolated increases, the order of the filters formed by the elastic members (4, 4a) and masses (5, 5a) connected with the damping plunger (2) and/or the damper housing (1) also increases.

## Revendications

1. Amortisseur de vibrations pour un système destiné à isoler vis-à-vis des vibrations des objets (3) de grande masse, tels que des machines, des sous-ensembles ou des bâtiments, par rapport à une embase (6), comprenant un boîtier d'amortisseur (1) partiellement rempli d'un milieu visqueux ou viscoélastique (1a), dans lequel plonge un poinçon d'amortisseur (2), lequel est relié à l'objet à isoler (3) de manière telle qu'il est agencé dans le trajet des efforts entre l'objet (3) et l'embase (6),
caractérisé en ce que
pour réduire la transmission des bruits de structure - en particulier vers les fréquences élevées - on prévoit un élément élastique (4) interposé entre le poinçon d'amortisseur (2) et l'objet à amortir (2), et en ce que la masse du poinçon d'amortisseur est augmentée au moyen d'une masse additionnelle (5) au-delà de sa masse nécessaire pour sa solidité statique et dynamique en se basant sur le matériau utilisé.

2. Amortisseur de vibrations selon la revendication 1, caractérisé en ce que l'élément élastique (4) interposé entre le poinçon d'amortisseur (2) et l'objet à amortir s'étend sur une partie importante de sa longueur dans le poinçon d'amortisseur (1) réalisé sous forme d'un godet ouvert.

3. Amortisseur de vibrations selon l'une ou l'autre des revendications 1 et 2, caractérisé en ce que le boîtier d'amortisseur (1) est supporté sur son embase (6) au moyen d'un élément élastique interposé (4a).

4. Amortisseur de vibrations selon l'une quelconque des revendications précédentes, caractérisé en ce que la masse du boîtier d'amortisseur (1), qui s'appuie sur l'embase (6) au moyen d'un élément élastique (4a), est également augmentée au moyen d'une masse additionnelle (5a) au-delà de sa masse nécessaire pour sa solidité statique et dynamique en se basant sur le matériau utilisé.

5. Amortisseur de vibrations selon l'une quelconque des revendications précédentes, caractérisé en ce que la masse additionnelle (5) est constituée par au moins un corps métallique en forme de plaque ou de disque, lequel est relié rigidement sur le plan mécanique au poinçon d'amortisseur (2).

6. Amortisseur de vibrations selon l'une quelconque des revendications précédentes, caractérisé en ce que la masse additionnelle (5) est constituée par un renfort de l'épaisseur de paroi du poinçon d'amortisseur (2) réalisé en métal.

7. Amortisseur de vibrations selon l'une quelconque des revendications précédentes, caractérisé en ce que le poinçon d'amortisseur (2) est constitué au moins partiellement en matériau métallique plein.

8. Amortisseur de vibrations selon l'une quelconque des revendications précédentes, caractérisé en ce que le poinçon d'amortisseur (2) et/ou la masse additionnelle (5) est réalisé en un matériau qui présente un poids spécifique important, qui correspond au moins à celui de l'acier.

9. Amortisseur de vibrations selon l'une quelconque des revendications précédentes, caractérisé en ce que l'élément élastique (4) interposé entre le poinçon d'amortisseur (2) et l'objet à amortir comporte au moins une masse intermédiaire.

10. Amortisseur de vibrations selon l'une quelconque des revendications précédentes, caractérisé en ce que l'élément élastique (4, 4a) est constitué par un agencement à vis ou à plaquettes élastiques, en matériau présentant l'élasticité du caoutchouc ou en PVC souple.

11. Amortisseur de vibrations selon la revendication 10, caractérisé en ce que l'élément élastique (4, 4a) est de plus amorti.

12. Amortisseur de vibrations selon l'une quelconque des revendications précédentes, caractérisé en ce qu'il comprend un passe-bas intégré de premier ordre ou d'un ordre supérieur.

13. Système destiné à l'isolation vis-à-vis des vibrations, comprenant un amortisseur de vibrations selon l'une quelconque des revendications précédentes, caractérisé en ce que l'objet à isoler est supporté additionnellement par des éléments élastiques (S₄) et/ou par des éléments élastiques (S₄, S₅) comportant des masses additionnelles (m₄).

14. Système selon la revendication 13, caractérisé en ce que pour l'isolation vis-à-vis des vibrations, on utilise pour le supportage des ressorts (4, 4a) qui contiennent des masses additionnelles (5, Sa), lesquelles sont supportées de leur côté de part et d'autre part des éléments élastiques.

15. Système selon la revendication 14, caractérisé en ce que, avec l'augmentation de l'ordre du système à ressort (4, 4a) qui supporte l'objet à isoler, on augmente également l'ordre des filtres qui sont formés par les éléments élastiques (4, 4a) et les masses (5, 5a) reliées au poinçon d'amortisseur (2) et/ou au boîtier d'amortisseur (1).
